# EUROPEAN PATENT SPECIFICATION

(11) **EP 3 638 895 B1**
(45) Date of publication and mention of the grant of the patent: **28.07.2021**
(21) Application number: 18749109.7
(22) Date of filing: 13.06.2018
(51) Int. Cl.: F01P 5/04, F01P 7/08, F01P 7/04, F04D 13/06, F04D 25/06, F16D 27/112, F01P 5/12, F04D 13/02, F04D 13/12, F04D 25/02, F04D 25/16, F16D 13/76

(54) **MIXED HYBRID-OPERATION GROUP FOR RECIRCULATING AND COOLING THE COOLING FLUID OF A VEHICLE**
MISCHHYBRIDBETRIEBSGRUPPE ZUR RÜCKFÜHRUNG UND KÜHLUNG DER KÜHLFLÜSSIGKEIT EINES FAHRZEUGS
GROUPE À FONCTIONNEMENT HYBRIDE MIXTE POUR LA RECIRCULATION ET LE REFROIDISSEMENT DU FLUIDE DE REFROIDISSEMENT D'UN VÉHICULE

(30) Priority: 15.06.2017 IT 201700066350
(43) Date of publication of application: 22.04.2020
(73) Proprietor: Baruffaldi S.p.A., 20067 Tribiano (IT)
(72) Inventor: BOFFELLI, Piercarlo, 20067 Tribiano (MI) (IT)
(74) Representative: Stucovitz, Alessandro
(86) International application number: PCT/IB2018/054294
(87) International publication number: WO 2018/229670

(56) References cited:
- EP-A1- 1 653 061
- WO-A1-94/19588
- DE-A1- 3 345 340
- DE-A1- 10 035 765
- DE-A1- 19 500 445
- US-A1- 2008 115 745

## Description

The present invention relates to a mixed hybrid-operation group for recirculating and cooling the cooling fluid of a vehicle.

It is known in the sector for production of engines, in particular combustion engines, for vehicles that there exists the need to cool said engines by means of recirculation of a cooling fluid which is driven by means of a corresponding recirculating pump which forces the fluid to be circulated through pipes arranged close to the parts of the engine which may overheat during use and conveys it back to a storage radiator inside which the fluid is cooled by means of air which is force-blown by a rotating fan situated behind the said radiator relative to the direction of forward movement of the vehicle.

It is also known that the recirculation and the cooling of the cooling fluid must be performed with flow rates depending on the actual cooling requirement determined by the real conditions of use of the engine and by the external temperature, in order to avoid the constant and unnecessary operation at full speed of devices - comprising the pump impeller and the cooling fan - which draw useful power and thereby increase the wear of the various component parts and the fuel consumption of the vehicle.

It is also known that, in order to solve this problem, devices for operating the fan and the pump impeller have been proposed such that the rotation thereof depends on the engagement of a friction coupling for transmission of a rotational movement depending on the revolutions of the driving shaft. These known devices, although fulfilling their function, nevertheless have the drawback that the driving movement is transmitted to the fan by means of an ON-OFF friction coupling able to determine only rotations depending on the revolutions of the vehicle driving shaft.

An example of such devices is described in US 2008-115745 A, on which the preamble of claim 1 is based, said device having moreover the drawback that it cannot operate the fan and the pump independently of each other.

The technical problem which is posed, therefore, is that of providing a group for cooling the cooling fluid of vehicles, comprising a recirculating pump and a fan for cooling the said fluid, which group is compact and has small radial and axial dimensions such that it may be inserted in the small spaces available in the engine compartment of vehicles between the radiator and the combustion engine and is designed to allow operation of the two elements rotating about the same axis of rotation, such as cause a variation in the speed of rotation of either one depending on the actual working requirement of the engine, also independently of the number of revolutions of the driving shaft.

In connection with this problem it is also required that this group should be easy and inexpensive to produce and assemble and be able to be easily installed at any user location by means of normal standardized connection means and that, despite its small dimensions, it is able to supply a sufficient quantity of cooling air in the form of a cone geometrically designed to cover the entire surface of the radiator containing the fluid to be cooled.

These results are obtained according to the present invention by a group for recirculating and cooling the cooling fluid of a vehicle comprising a recirculating pump, the impeller of which is mounted on a first end of a shaft supported by a fixed group comprising a pump body designed, during use, to be fixed to the base of a combustion engine of the vehicle; a first electric motor for rotationally driving the pump; a fan fastened to a bell member mounted on the pump body via a bearing; a hybrid assembly for rotationally driving the fan comprising a friction coupling, which is designed to be connected to the driving shaft of the vehicle in order to transmit a rotational movement from the driving shaft to the fan, and a second electric motor for imparting to the fan a number of revolutions independent of the revolutions of the said driving shaft; wherein the pump impeller and the fan are arranged so as to rotate about a single fixed axis of rotation.

With this configuration the fan and the pump impeller are advantageously able to be operated independently of each other and the vehicle engine.

Further details may be obtained from the following description of a non-limiting example of embodiment of the subject of the present invention, provided with reference to the accompanying drawings, in which:

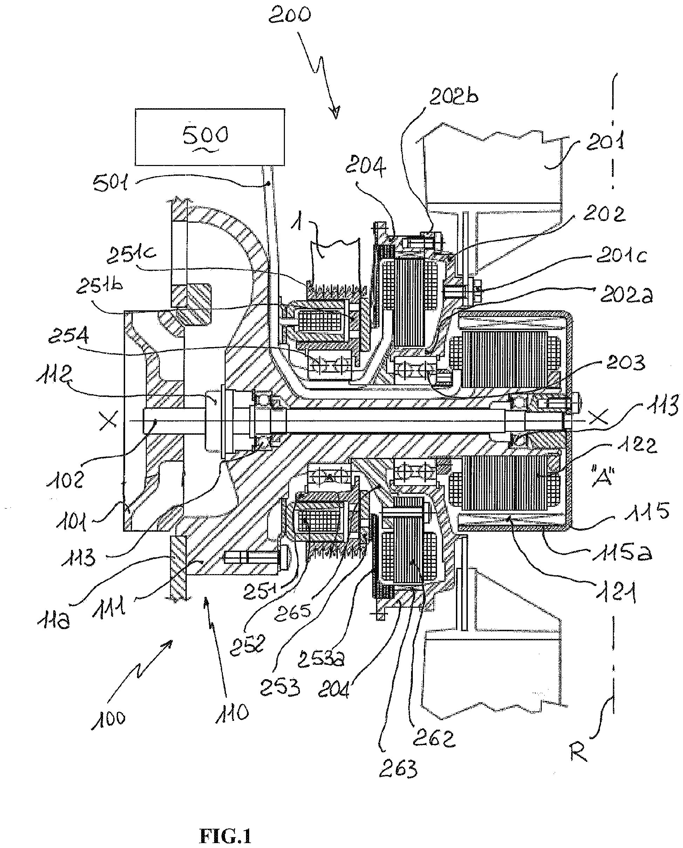

Figure 1: shows a cross-section along a vertical diametral plane of the group according to the present invention.

As shown in Fig. 1 and assuming solely for easier description and without a limiting meaning a longitudinal direction X-X for convenience coinciding with the axis of rotation of the impeller of the recirculation pump, as well as a front part A in the direction of forward movement of the vehicle and a dot-dash line representing the radiator R of the vehicle, the group according to the invention comprises preferably:
- a recirculating pump 100, the impeller 101 of which is mounted on a first end of a shaft 102 supported by a fixed group 110 comprising the pump body 111 designed, during use, to be fixed to the base 11a of the engine of the vehicle.

A sealing gasket 112, coaxial with the shaft 102, and a pair of bearings 113 on the inner race of which the impeller shaft 102 is keyed, are arranged inside the pump body 111.

The front end of the impeller shaft 102 has, connected thereto, a flange 115, preferably in the form of an overturned C, the radially outer edge 115a thereof extending in the axial direction and carrying the rotor 121 of a first electric motor 120 mounted on the pump body 111; the stator 122 of the first motor 120 is mounted on the front end of the pump body 11 and in a position radially on the inside of that of the rotor 121.

The arrangement of the rotor 121 in a position radially on the outside of the stator 122 also allows high torques to be imparted to the driven shaft 102 of the pump owing to the significant radial length of the flange 115.

The assembly 200 consisting of the fan 201 with associated drive is mounted in a position axially arranged between the first electric motor 120 driving the driven shaft 102 of the impeller 101 of the pump and the impeller itself.

In detail the assembly comprises:
- a fan 201 fastened to a bell member 202 which has:
- a radially inner sleeve 202a keyed onto the outer race of a bearing 203, the inner race of which is mounted on the pump body 111;
- a radially outer annular edge 202b, to which a ring 204 for connection to the means for transmission/generation of the fan movement is coupled.

According to the invention it is envisaged that said movement transmission/generation means comprise a first device 250 for transmitting the movement generated by the shaft of the combustion engine and a second device 260 for generating a movement independent of that of the combustion engine.

In greater detail:
- the first device 250 for transmitting the movement of the shaft of the combustion engine comprises:
   a friction coupling 250, preferably of the electromagnetically operated type, comprising an electromagnet 252 fixed to the pump body 251, housed inside a corresponding seat of a mechanical rotor 251, arranged facing and on the front side with respect to the electromagnet 252, mounted on a bearing 254 keyed onto the pump body 111; an armature 253 arranged facing the electromagnet 252 axially on the opposite side to the latter with respect to the mechanical rotor 251; the armature 253 is connected to the disc 204 by means of a resilient membrane 253a designed to allow movements of the armature in the axial direction, while preventing the relative rotation thereof with respect to the ring 204.

In greater detail, the mechanical rotor 251 has an annular part 251 forming a flat surface for circulation of the magnetic flux induced by the electromagnet and an axial extension 251c situated radially on the outside and configured as a set of teeth designed to engage with a multiple-groove belt 1 connected to the driving shaft, directly or via transmission means, and therefore designed to transmit the movement to the mechanical rotor 251 and from the latter to the fan 201.

Since the pulling force of the belt 1 is transmitted onto the outer bearing 254 it is possible to limit the size of the inner bearings 113 which support the driven shaft 102 of the impeller 101 and which are not subject to dynamic loads induced by the belt, thus increasing the working life and limiting the overall dimensions.
- the second movement transmission device 260 comprises:
   an electric motor 261, the stator 262 of which is supported by a structure 265 fixed to the pump body and the rotor 263 of which, situated radially on the outside of the stator 261, is fixed to the ring 204 for connection to the bell member 202 supporting the fan 201.

The electric power is supplied to the first motor 120 driving the pump and the second motor 261 driving the fan via cables 501 passing between the bearing 254 and the pump body and connected to an electric power source of the engine.

It is envisaged that both the motors are controlled by an electronic control and drive unit 500.

As shown, it is envisaged, moreover, that the rotating part 263,121 of the electric motors rotates about the longitudinal axis X-X.

As shown in Fig. 1, it is envisaged that, owing to the axially staggered relative arrangement of the coupling 250 and the electric motor 261 driving the fan 201, the radial dimensions of both the components may be limited, this favouring assembly of the group inside the small spaces available inside the engine compartments intended to house said components.

In addition to the above the small radial dimensions, in particular of the bell member 202 supporting the fan 201, are designed to determine a centring point 201c of the fan 201 in a radial position substantially equivalent to that of the pulley 251, allowing also the diametral dimensions of the fan to be kept small for the same quantity of forced air and cone for diffusion of the air towards the radiator. According to a preferred embodiment it is envisaged that the stator 122 of the first electric motor 120 has an axial dimension which is larger than the radial dimension.

Preferably the stator 262 of the second electric motor 261 has an axial dimension smaller than its radial dimension.

Although not shown, it is also envisaged that the electronic drive of the electric motors may be arranged in an axially inner position which is coaxial - preferably concentric - with the stator of the second electric motor for driving the fan.

With this configuration operation of the group occurs in the following manner:
- the impeller 101 of the pump 100 is rotated by the first electric motor 120 connected to the driven shaft 120 and controlled by the drive unit 500 which determines the required number of revolutions for forcing the recirculation of the fluid according to the actual need;
- the fan 201:
   in conditions where the electromagnet 252 is not excited and the motor 261 not powered, the bell member 202 is disconnected from all the movement sources and the fan 210 is at a standstill in the idle condition;
- in the conditions where the electromagnet 252 is excited and the motor 260 is not powered, the armature 253 is recalled against the mechanical rotor 251 and the fan 201 is rotated with a number of revolutions equal or proportional to the number of revolutions of the driving shaft to which it is connected via the belt 1.

In this operating condition, the electric rotor 263 integral with the mechanical rotor 251 is rotationally driven by the friction coupling and induces a current on the stator 262, thus generating recoverable and utilizable energy.
- in conditions where the electromagnet 252 is not excited and the motor 260 energized, the fan 201 is rotated by the rotor 263 of the motor 260 with a number of revolutions determined by the control unit 500 according to the actual cooling requirement.

In both the embodiments the fan rotates in the direction - anticlockwise in the example of the Figure - such as to draw air from the outside towards the surface of the radiator arranged in front of the fan with respect to the direction of forward movement of the vehicle; according to the invention it is envisaged however that the second electric motor 261 may be powered with currents in the opposite sense so as to cause a rotation of the mechanical rotor 251 of the said electric motor and therefore the fan in the reverse direction - clockwise direction in the example - of a thrusting force of the air in the direction of forward movement of the vehicle so that, crossing the radiator from the inside towards the outside, it causes removal of the dirt which has accumulated on the surface of the radiator during the cooling cycles, thus restoring the full functionality of the radiator which in the meantime has been reduced owing to the dirt.

It is therefore clear how the group for recirculating and cooling the cooling fluid of a vehicle according to the invention, comprising a recirculating pump and a fan rotating independently of each other about a same fixed axis of rotation, has both radial and axial dimensions which are compact; the group is moreover able to determine speeds of rotation of the pump impeller which are independent of those of the vehicle driving shaft and a hybrid transmission of the movement to the cooling fan so as to determine rotations thereof dependent on the revolutions of the driving shaft or, alternatively, independent thereof. Although described in connection with a number of embodiments and a number of preferred examples of implementation of the invention, it is understood that the scope of protection of the present patent is determined solely by the claims below.

## Claims

1. Group for recirculating and cooling a cooling fluid of a vehicle, comprising:
- a recirculating pump (100), the impeller (101) of which is mounted on a first end of a shaft (102) supported by a fixed group (110) comprising a pump body (111) designed, during use, to be fixed to the base (11a) of a combustion engine of the vehicle;
- a first electric motor (120) for rotationally driving the pump (110);
- a fan (201) fastened to a bell member (202)
- an assembly for rotationally driving the fan (201) comprising a friction coupling (250);
wherein the impeller of the pump (110) and the fan (201) are arranged to rotate about a single fixed axis of rotation (X-X);
**characterized in that**:
- the bell member (202) is mounted on the body (111) of the pump via a bearing (240);
and **in that**:
- the assembly for rotationally driving the fan (201) is a hybrid assembly comprising said friction coupling (250), which is designed to be connected to the driving shaft of the vehicle in order to transmit a rotational movement from the driving shaft to the fan (201), and a second electric motor (261) for imparting to the fan (201) a number of revolutions independent of the revolutions of the said driving shaft;
the fan and the pump impeller being therefore able to be operated independently of each other.

2. Group according to Claim 1, **characterized in that** said first electric motor (120) has a stator (122) mounted on the body of the pump (111) and a rotor (121) radially on the outside of the stator (121) of the said motor.

3. Group according to Claim 2, **characterized in that** the rotor (121) of the first electric motor (120) is integral with the radially outer edge (115a) of a flange (115) connected to the front end of the shaft (102), **wherein optionally** said flange (115) is in the form of an "overturned C".

4. Group according to any one of the preceding claims, **characterized in that** the fan (201) and/or the friction coupling (250) and/or the second electric motor (261) are arranged on the pump body in a position axially situated between the first electric motor (120) driving the driven shaft (102) of the impeller (101) and the said impeller (101).

5. Group according to any one of the preceding claims, **characterized in that** the fan (201) is fastened to a bell member (202) which has a radially inner sleeve (202a) keyed onto the outer race of a bearing (203), the inner race of which is mounted on the pump body (111) and a radially outer annular edge (202b) to which a ring (204) for connection to the hybrid assembly for driving the fan is coupled.

6. Group according to Claim 5, **characterized in that** the centring point (201c) of the fan (201) on the bell member (202) is in a radial position corresponding to that of the pulley (251b) of the rotor (251) of the friction coupling.

7. Group according to any one of the preceding claims, **characterized in that** the friction coupling (250) comprises an electromagnet (252) fixed to the pump body (111) and housed inside a corresponding seat of a mechanical rotor (251), which is arranged facing and on the front side with respect to the electromagnet (252) and is mounted on a bearing (254) keyed onto the said pump body (111); an armature (253) arranged facing the electromagnet (252) on the opposite side to the latter relative to the mechanical rotor (251) and connected to the disc (204) by means of a resilient membrane (253a) designed to allow movements of the armature in the axial direction, while preventing the relative rotation thereof with respect to the ring (204).

8. Group according to any one of the preceding claims, **characterized in that** the second electric motor (261) comprises a stator (262) supported by a structure (265) fixed to the pump body, and a rotor (263) situated radially on the outside of the stator (262) and fastened to the ring (204) for connection to the bell member (202) supporting the fan (201).

9. Group according to any one of the preceding claims, **characterized in that** the first electric motor (120) has a stator (122) with an axial dimension greater than the radial dimension.

10. Group according to Claim 1, **characterized in that** the second electric motor (261) has a stator (262) with an axial dimension smaller than its radial dimension.

11. Group according to Claim 1, **characterized in that** both the electric motors (120,261) are controlled by an electronic control and drive unit (500) .

12. Group according to one of Claims 1-**characterized in that** the second electric motor (261) is in an axial position situated between the first electric motor (120) and the friction coupling (250).

13. Group according to Claim **11 or 12,** **characterized in that** the unit (500) for driving the electric motors is arranged in an axially inner position, coaxial, preferably concentric, with the stator of the electric motor driving the fan.

14. Group according to any one of the preceding claims, **characterized in that** the electric motor for driving the fan is designed to cause a rotation thereof in two opposite directions, i.e. a direction for drawing air so as to cool the radiator or a direction for force-blowing air so as to clean the radiator.

15. Group according to any one of the preceding claims, **characterized in that**, in conditions where the electromagnet is excited, the friction coupling causes rotation of the electric rotor of the electric motor for driving the fan, this inducing a current on the associated stator and generating recoverable energy.

## Patentansprüche

1. Gruppe zum Umwälzen und Kühlen einer Kühlflüssigkeit eines Fahrzeugs, umfassend:
- eine Umwälzpumpe (100), deren Laufrad (101) auf einem ersten Ende einer Welle (102) montiert ist, die von einer feststehenden Gruppe (110) gestützt wird, die einen Pumpenkörper (111) umfasst, der dazu ausgelegt ist, während des Gebrauchs an der Basis (11a) eines Verbrennungsmotors des Fahrzeugs befestigt zu werden;
- einen ersten Elektromotor (120) zum Drehantrieb der Pumpe (110) ;
- einen Lüfter (201), der an einem Glockenelement (202) befestigt ist
- eine Baugruppe für einen Drehantrieb des Lüfters (201), eine Reibungskupplung (250) umfassend;
wobei das Laufrad der Pumpe (110) und der Lüfter (201) angeordnet sind, um sich um eine einzige feste Drehachse (X-X) zu drehen;
**dadurch gekennzeichnet, dass**:
- das Glockenelement (202) über ein Lager (240) am Pumpenkörper (111) montiert ist;
und dass :
- die Baugruppe für den Drehantrieb des Lüfters (201) eine Hybridbaugruppe ist, die die Reibungskupplung (250), die dazu bestimmt ist, mit der Antriebswelle des Fahrzeugs verbunden zu werden, um eine Drehbewegung von der Antriebswelle auf den Lüfter (201) zu übertragen, und einen zweiten Elektromotor (261) umfasst, um dem Lüfter (201) eine von den Umdrehungen der Antriebswelle unabhängige Anzahl von Umdrehungen zu verleihen;
der Lüfter und das Pumpenlaufrad können somit unabhängig voneinander betrieben werden.

2. Gruppe nach Anspruch 1, **dadurch gekennzeichnet, dass** der erste Elektromotor (120) einen Stator (122), der auf dem Pumpenkörper (111) montiert ist, und einen Rotor (121) aufweist, der sich radial außerhalb des Stators (121) des Motors befindet.

3. Gruppe nach Anspruch 2, **dadurch gekennzeichnet, dass** der Rotor (121) des ersten Elektromotors (120) mit dem radial äußeren Rand (115a) eines mit dem vorderen Ende der Welle (102) verbundenen Flansches (115) einstückig ist, wobei optional der Flansch (115) in der Form eines "umgedrehten C" ist.

4. Gruppe nach einem der vorhergehenden Ansprüche, **dadurch gekennzeichnet, dass** der Lüfter (201) und/oder die Reibungskupplung (250) und/oder der zweite Elektromotor (261) an dem Pumpenkörper in einer Position angeordnet sind, die axial zwischen dem ersten Elektromotor (120), der die angetriebene Welle (102) des Laufrads (101) antreibt, und dem Laufrad (101) liegt.

5. Gruppe nach einem der vorhergehenden Ansprüche, **dadurch gekennzeichnet, dass** der Lüfter (201) an einem Glockenelement (202) befestigt ist, das eine radial innere Hülse (202a), die auf den Außenring eines Lagers (203) aufgekeilt ist, dessen Innenring am Pumpenkörper (111) montiert ist, und einen radial äußeren ringförmigen Rand (202b) aufweist, an den ein Ring (204) zur Verbindung mit der Hybridbaugruppe zum Antrieb des Lüfters gekoppelt ist.

6. Gruppe nach Anspruch 5, **dadurch gekennzeichnet, dass** der Zentrierpunkt (201c) des Lüfters (201) auf dem Glockenelement (202) in einer radialen Position liegt, die derjenigen der Riemenscheibe (251b) des Rotors (251) der Reibungskupplung entspricht.

7. Gruppe nach einem der vorhergehenden Ansprüche, **dadurch gekennzeichnet, dass** die Reibungskupplung (250) einen Elektromagneten (252) umfasst, der an dem Pumpenkörper (111) befestigt ist und in einem entsprechenden Sitz eines mechanischen Rotors (251) untergebracht ist, der dem Elektromagneten (252) gegenüberliegend und auf der Vorderseite in Bezug auf den Elektromagneten (252) angeordnet ist und auf einem Lager (254) montiert ist, das auf dem Pumpenkörper (111) aufgekeilt ist; einen Anker (253), der dem Elektromagneten (252) gegenüberliegend auf der dem mechanischen Rotor (251) gegenüberliegenden Seite angeordnet und mit der Scheibe (204) mittels einer elastischen Membran (253a) verbunden ist, die ausgelegt ist, um Bewegungen des Ankers in axialer Richtung zuzulassen, während sie dessen relative Drehung in Bezug auf den Ring (204) verhindert.

8. Gruppe nach einem der vorhergehenden Ansprüche, **dadurch gekennzeichnet, dass** der zweite Elektromotor (261) einen Stator (262), der von einer am Pumpenkörper befestigten Struktur (265) gestützt wird, und einen Rotor (263) umfasst, der sich radial an der Außenseite des Stators (262) befindet und an dem Ring (204) zur Verbindung mit dem Glockenelement (202), das den Lüfter (201) stützt, befestigt ist.

9. Gruppe nach einem der vorhergehenden Ansprüche, **dadurch gekennzeichnet, dass** der erste Elektromotor (120) einen Stator (122) mit einer axialen Abmessung größer als die radiale Abmessung aufweist.

10. Gruppe nach Anspruch 1, **dadurch gekennzeichnet, dass** der zweite Elektromotor (261) einen Stator (262) mit einer axialen Abmessung kleiner als seine radiale Abmessung aufweist.

11. Gruppe nach Anspruch 1, **dadurch gekennzeichnet, dass** die beiden Elektromotoren (120, 261) von einer elektronischen Steuer- und Antriebseinheit (500) gesteuert werden.

12. Gruppe nach einem der Ansprüche 1-11, **dadurch gekennzeichnet, dass** der zweite Elektromotor (261) in einer axialen Position zwischen dem ersten Elektromotor (120) und der Reibungskupplung (250) angeordnet ist.

13. Gruppe nach Anspruch 11 oder 12, **dadurch gekennzeichnet, dass** die Einheit (500) zum Antrieb der Elektromotoren in axialer Innenlage, koaxial, vorzugsweise konzentrisch, zum Stator des den Lüfter antreibenden Elektromotors angeordnet ist.

14. Gruppe nach einem der vorhergehenden Ansprüche, **dadurch gekennzeichnet, dass** der Elektromotor zum Antrieb des Lüfters ausgelegt ist, um eine Drehung desselben in zwei entgegengesetzte Richtungen zu bewirken, d. h. in eine Richtung zum Ansaugen von Luft, um den Kühler zu kühlen, oder in eine Richtung zum Zwangsblasen von Luft, um den Kühler zu reinigen.

15. Gruppe nach einem der vorhergehenden Ansprüche, **dadurch gekennzeichnet, dass** die Reibungskupplung unter Bedingungen, bei denen der Elektromagnet erregt ist, eine Drehung des elektrischen Rotors des Elektromotors zum Antrieb des Lüfters bewirkt, wodurch ein Strom am zugehörigen Stator induziert und rückgewinnbare Energie erzeugt wird.

## Revendications

1. Groupe de recirculation et de refroidissement d'un liquide de refroidissement d'un véhicule, comprenant :
- une pompe de recirculation (100), dont la roue à aubes (101) est montée sur une première extrémité d'un arbre (102) supporté par un groupe fixe (110) comprenant un corps de pompe (111) conçu, en utilisation, pour être fixé à la base (11a) d'un moteur à combustion du véhicule ;
- un premier moteur électrique (120) destiné à entraîner en rotation la pompe (110) ;
- un ventilateur (201) fixé à un élément cloche (202) ;
- un ensemble destiné à entraîner en rotation le ventilateur (201) comprenant un embrayage à friction (250) ;
dans lequel la roue à aubes de la pompe (110) et le ventilateur (201) sont conçus pour tourner autour d'un unique axe de rotation (X-X) fixe ;
**caractérisé en ce que** :
- l'élément cloche (202) est monté sur le corps (111) de la pompe par le biais d'un palier (240) ;
et **en ce que** :
- l'ensemble destiné à entraîner en rotation le ventilateur (201) est un ensemble hybride comprenant ledit embrayage à friction (250), qui est conçu pour être en prise avec l'arbre de transmission du véhicule afin de transmettre un mouvement de rotation de l'arbre de transmission au ventilateur (201), et un second moteur électrique (261) destiné à communiquer au ventilateur (201) un certain nombre de révolutions indépendant des révolutions dudit arbre de transmission ;
le ventilateur et la roue à aubes de pompe pouvant par conséquent fonctionner indépendamment l'un de l'autre.

2. Groupe selon la revendication 1, **caractérisé en ce que** ledit premier moteur électrique (120) comporte un stator (122) monté sur le corps de la pompe (111) et un rotor (121) disposé radialement sur l'extérieur du stator (121) dudit moteur.

3. Groupe selon la revendication 2, **caractérisé en ce que** le rotor (121) du premier moteur électrique (120) est d'un seul tenant avec le bord radialement extérieur (115a) d'une bride (115) reliée à l'extrémité avant de l'arbre (102), dans lequel, facultativement, ladite bride (115) est sous la forme d'un « C retourné ».

4. Groupe selon l'une quelconque des revendications précédentes, **caractérisé en ce que** le ventilateur (201) et/ou l'embrayage à friction (250) et/ou le second moteur électrique (261) sont disposés sur le corps de pompe à une position située axialement entre le premier moteur électrique (120) entraînant l'arbre mené (102) de la roue à aubes (101) et ladite roue à aubes (101).

5. Groupe selon l'une quelconque des revendications précédentes, **caractérisé en ce que** le ventilateur (201) est fixé à un élément cloche (202) qui comporte un manchon radialement interne (202a) claveté sur le chemin extérieur d'un palier (203), dont le chemin intérieur est monté sur le corps de pompe (111), et un bord annulaire radialement externe (202b) auquel est accouplée une bague (204) de liaison avec l'ensemble hybride à des fins d'entraînement du ventilateur.

6. Groupe selon la revendication 5, **caractérisé en ce que** le point de centrage (201c) du ventilateur (201) situé sur l'élément cloche (202) se trouve à une position radiale correspondant à celle de la poulie (251b) du rotor (251) de l'embrayage à friction.

7. Groupe selon l'une quelconque des revendications précédentes, **caractérisé en ce que** l'embrayage à friction (250) comprend un électro-aimant (252) fixé au corps de pompe (111) et logé à l'intérieur d'un logement correspondant d'un rotor mécanique (251), qui est disposé en regard de l'électro-aimant (252) et du côté avant par rapport à ce dernier et qui est monté sur un palier (254) claveté sur ledit corps de pompe (111) ; une armature (253) disposée en regard de l'électro-aimant (252) du côté opposé à ce dernier par rapport au rotor mécanique (251) et reliée au disque (204) au moyen d'une membrane élastique (253a) conçue pour permettre des mouvements de l'armature dans la direction axiale, tout en empêchant sa rotation relative par rapport à la bague (204).

8. Groupe selon l'une quelconque des revendications précédentes, **caractérisé en ce que** le second moteur électrique (261) comprend un stator (262) supporté par une structure (265) fixée au corps de pompe, et un rotor (263) situé radialement du côté extérieur du stator (262) et fixé à la bague (204) à des fins de liaison avec l'élément cloche (202) supportant le ventilateur (201).

9. Groupe selon l'une quelconque des revendications précédentes, **caractérisé en ce que** le premier moteur électrique (120) comporte un stator (122) ayant une dimension axiale supérieure à la dimension radiale.

10. Groupe selon la revendication 1, **caractérisé en ce que** le second moteur électrique (261) comporte un stator (262) ayant une dimension axiale inférieure à sa dimension radiale.

11. Groupe selon la revendication 1, **caractérisé en ce que** les deux moteurs électriques (120, 261) sont commandés par une unité de commande et de pilotage électronique (500).

12. Groupe selon l'une des revendications 1 à 11, **caractérisé en ce que** le second moteur électrique (261) est dans une position axiale entre le premier moteur électrique (120) et l'embrayage à friction (250).

13. Groupe selon la revendication 11 ou la revendication 12, **caractérisé en ce que** l'unité (500) destinée à piloter les moteurs électriques est disposée à une position axialement intérieure, coaxiale, de préférence concentrique, par rapport au stator du moteur électrique entraînant le ventilateur.

14. Groupe selon l'une quelconque des revendications précédentes, **caractérisé en ce que** le moteur électrique destiné à entraîner le ventilateur est conçu pour provoquer une rotation de ce dernier dans deux sens contraires, c'est-à-dire dans un sens d'aspiration d'air ayant pour objet de refroidir le radiateur ou dans un sens de soufflage d'air forcé ayant pour objet de nettoyer le radiateur.

15. Groupe selon l'une quelconque des revendications précédentes, **caractérisé en ce que**, dans des conditions dans lesquelles l'électro-aimant est excité, l'embrayage à friction provoque une rotation du rotor électrique du moteur électrique pour entraîner le ventilateur, ceci induisant un courant sur le stator associé et générant de l'énergie récupérable.
